# NEUE EUROPÄISCHE PATENTSCHRIFT

(11) **EP 1 452 307 B2**
(45) Veröffentlichungstag und Bekanntmachung des Hinweises auf die Entscheidung über den Einspruch: **24.04.2013**
(45) Hinweis auf die Patenterteilung: 18.11.2009
(21) Anmeldenummer: 04405108.4
(22) Anmeldetag: 25.02.2004
(51) Int. Cl.: B32B 27/34, F16L 11/04, F16L 11/127

(54) **Thermoplastischer Mehrschichtverbund in Form eines Hohlkörpers**
Thermoplastique hollow-shaped multilayer laminate
Laminé thermoplastique et multi-couche sous forme de corps creux

(30) Priorität: 28.02.2003 CH 3112003
(43) Veröffentlichungstag der Anmeldung: 01.09.2004
(73) Patentinhaber: EMS-CHEMIE AG, 7013 Domat-Ems (CH)
(72) Erfinder: Stolarz, Alex, 7402 Bonaduz (CH); Flepp, Albert, 7013 Domat/Ems (CH); Sturzel, André, 7206 Igis (CH); Stöppelmann, Georg, 7402 Bonaduz (CH)
(74) Vertreter: Bremi, Tobias Hans

(56) Entgegenhaltungen:
- EP-A1- 1 036 968
- EP-A1- 1 162 061
- EP-A1- 1 162 061
- EP-A2- 1 216 826
- WO-A1-95/27866
- WO-A1-95/27866
- US-A- 4 881 576

## Beschreibung

### TECHNISCHES GEBIET

Die vorliegende Erfindung betrifft einen thermoplastischen Mehrschichtverbund in Form eines Hohlkörpers aufgebaut aus einer Innenschicht auf Basis von Polyamiden, einer Zwischenschicht sowie einer thermoplastischen Aussenschicht. Zudem betrifft die vorliegende Erfindung ein Verfahren zur Herstellung eines derartigen thermoplastischen Mehrschichtverbundes sowie eine Verwendung eines derartigen thermoplastischen Mehrschichtverbundes. Unter Hohlkörper werden hier auch Hohlprofile, insbesondere ein Mehrschichtschlauch oder ein Mehrschichtrohr, aber auch ein Mehrschichtbehälter verstanden.

### STAND DER TECHNIK

Seit langer Zeit werden in Kraftfahrzeugen Kraftstoffleitungen aus Polyamid eingebaut. Zunächst wurden dafür Monorohre verwendet, diese wurden aber wegen der erforderlichen Permeationswerte und der erforderlichen Schlagzähigkeit zunehmend durch Mehrschicht-Kraftfahrzeug-Rohrleitungen ersetzt. Derartige Leitungen weisen eine hohe thermische Belastbarkeit, eine hohe Längenstabilität sowie eine grosse Resistenz bzw. niedrige Permeabilität nicht nur für die Hauptkomponenten der transportierten Kraftstoffe auf, sondern auch für darin vorhandene Additive oder Nebenkomponenten wie beispielsweise alkoholische Komponenten, aromatische Bestandteile etc..

Eine derartige Mehrschicht-Kraftfahrzeug-Rohrleitung ist beispielsweise in der deutschen Patentschrift DE 40 06 870 C1 beschrieben. Die darin vorgestellte kälteschlagzähe und längenstabile Kraftstoffleitung ist kurzzeitig thermisch überlastbar und ist aus mindestens drei Schichten aufgebaut. Dabei sind die innere und die äussere Schicht aus schlägzähmodifiziertem Polyamid mit oder ohne Weichmacher ausgebildet. Als innere Schicht wird bevorzugt Polyamid 6 angegeben, während für die Aussenschicht Polyamid 6, 11, 12, oder 1212 vorgeschlagen werden. Als mittlere Schicht, d. h. als so genannte Barriereschicht, werden ebenfalls Polyamide angegeben, konkret werden Polyamid 66 und Polyamidelastomere auf Basis von Polyamid 12 genannt. Die Verwendung derartiger Polyamide als Barriereschicht führt zu einer erhöhten Barrierewirkung in Bezug auf die meist toxischen aromatische Bestandteile der Kraftstoffe.

Eine weitere Mehrschicht-Kraftfahrzeug-Rohrleitung auf Basis von Polyamid wird im deutschen Gebrauchsmuster G 92 03 865.4 U1 angegeben. Wiederum handelt es sich um eine Leitung mit einem Aufbau von drei Schichten, wobei auch in diesem Fall für die Innen- und/oder die Aussenschicht schlagzähmodifizierte Homo- und Copolyamide einschliesslich der elastomeren Copolyamide Anwendung finden. Bevorzugt werden dafür Polyamid 6, Polyamid 11, sowie Polyamid 12 vorgeschlagen. Als Barriereschicht in der Mitte zwischen diesen beiden Schichten aus Polyamid werden Ethylen/Vinylalkohol-Copolymere (EVOH) vorgeschlagen. Um die Haftung zwischen dieser mittleren Schicht und den äusseren Schichten aus Polyamid zu gewährleisten, ist eine zusätzliche Zwischenschicht aus einem Polyamidelastomeren, z. B. aus einem elastomeren Copolyamid aus der Gruppe der Polyetherpolyamide oder der Polyetheresterpolyamide angegeben.

Im Zusammenhang mit einer mittleren Schicht als Barriereschicht ist ausserdem auf die japanische Offenlegungsschrift JP 07-308996 hinzuweisen. Zur Spannungsrissverminderung wird in dieser Schrift vorgeschlagen, die Schicht aus Ethylen/Vinylalkohol-Copolymeren teilweise mit einem Polyamid-Copolymer zu versetzen. Als Copolymer wird dabei unter anderem ein Copolymer aus Polyamid 6 und Polyamid 12 (Copolyamid 6/12) angegeben.

Insbesondere im Zusammenhang mit der Problematik der Krümmung von derartigen Leitungen ist zudem auf die US 5,469,892 hinzuweisen, welche über balg-ähnliche Bereiche verfügt, die eine problemlose Krümmung derartiger Rohre vereinfacht. In dieser Schrift wird ein dreischichtiger Aufbau beschrieben, bei welchem die äussere Schicht aus Polyamid 12, Polyamid 11 oder Polyamid 6 gebildet wird. Als Option wird ausserdem darauf hingewiesen, eine derartige äussere Schicht als Mehrkomponentensystem aufzubauen, wobei unter anderem eine Mischung aus Nylon-6-Copolymeren mit anderen Nylons vorgeschlagen wird. Als innere Schicht werden Polyamid 12, Polyamid 11, Polyamid 6 als thermoplastisches Material und Mischungen davon vorgeschlagen. Wiederum wird unter anderem auf die Möglichkeit hingewiesen, auch bei der inneren Schicht Nylon-6-Copolymere vermischt mit anderen Nylons und gegebenenfalls olefinischen Bestandteilen zu verwenden. Als mittlere Schicht wird auf eine mit den beiden äusseren Schichten eine Haftung eingehende Schicht ohne Polyamid-Bestandteile hingewiesen. Bevorzugt wird dabei unter anderem auf Ethylen/Vinylalkohol-Copolymere (EVOH) hingewiesen.

Die DE 101 10 964 A1 beschreibt ebenfalls einen thermoplastischen Mehrschichtverbund zur Verwendung als Leitung für.Kraftstoffe. Hier handelt es sich um eine Leitung mit einem Aufbau aus vier Schichten, wobei als innere Schicht eine Schicht auf Basis von Polyamid 6, Polyamid 46, Polyamid 66, Polyamid 69, Polyamid 610 oder Polyamid 612 vorgeschlagen wird, gefolgt von einer Formmasse auf Basis von Ethylen/Vinylalkohol-Copolymeren. Auf der anderen Seite folgt auf diese EVOH Schicht eine haftvermittelnde Formmasse auf Basis von Copolyamid 6/12 oder einer Polyamid-Mischung. Unter anderem werden dabei Mischungen aus Polyamid 6 und Polyamid 12 mit Verträglichkeitsvermittler bzw. Mischungen aus Polyamid 6 und Polyamid 11 mit Verträglichkeitsvermittler als derartige Formmassen vorgeschlagen. Aussenseitig wird ein derartiger Schlauch durch eine Schicht auf Basis von Polyamid 12, Polyamid 11, Polyamid 1010, Polyamid 1012 oder Polyamid 1212 abgeschlossen.

Als Stand der Technik aus neuerer Zeit sollte ausserdem auf die EP 1 077 341 A2 hingewiesen werden, welche eine Mehrschicht-Kraftfahrzeug-Rohrleitung beschreibt, deren innerste Schicht ein elektrisch leitfähig gemachtes Fluorpolymer umfasst. Dieses dient als Barriere und wird gefolgt von einer weiteren Schicht aus Fluorpolymer, welche bei einer Temperatur von 600 Grad F (ca. 315 Grad Celsius) extrudiert werden kann. Diese Schicht wird gefolgt von einer Schicht aus Haftvermittler, wobei es sich dabei um Mischungen aus Polymeren handeln kann. In einem Koextrusionsprozess werden als äusserste Schicht unter anderem Copolymere oder Mischungen aus Polymeren vorgeschlagen, wobei dafür eine Vielzahl von Bausteinen in Frage kommen, so zum Beispiel verschiedene Polyamide, Polyester, Polyurethane, Polyvinylchloride etc..

Weiterhin ist auf die EP 1 216 826 A2 hinzuweisen, welche grundsätzlich einen Mehrschichtverbund beschreibt, welcher aus einer Formmasse aus Polyamid (bevorzugt Polyamid 6, Polyamid 66 oder Polyamid 6/66 sowie Mischungen davon), optional mit einem Polyamin-Polyamid-Copolymeren versetzt, sowie mit Gewichtsteilen von anderem Polyamid (bevorzugt Polyamid 11, Polyamid 12, Polyamid 612, Polyamid 1012, Polyamid 1212 sowie Mischungen davon) sowie anschliessend daran aus einer Schicht aus Ethylen/Vinylalkohol-Copolymer besteht. Dabei wird die Schicht aus Polyamid bevorzugt bei einem Rohr aussenseitig angeordnet. Die Zielsetzung besteht dabei im wesentlichen darin, in der Formmasse aus Polyamid entweder ein Polyamid-Copolymeres als Verträglichkeitsvermittler vorzusehen, oder bei Abwesenheit eines derartigen Polyamid-Copolymeren die Kompoundiertemperatur derart hoch anzusetzen, dass dabei Umamidierungen ablaufen, welche bei der Kompoundierung zu die Funktion des Verträglichkeitsvermittlers übernehmenden Polyamid-Blockcopolymeren führen. Dieser Vorgang wird bevorzugt zusätzlich durch Zugabe von entsprechenden Katalysatoren wie beispielsweise hypophosphorige Säure, Dibutylzinnoxid, Triphenylphosphin oder Phosphorsäure unterstützt.

### DARSTELLUNG DER ERFINDUNG

Der Erfindung liegt die Aufgabe zugrunde, einen in Bezug auf die im Stand der Technik zur Verfügung stehenden Mehrschicht-Kraftfahrzeug-Rohrleitungen überlegenen Mehrschicht-Aufbau für Hohlkörper vorzuschlagen. Insbesondere soll dieser Aufbau von innen gegen peroxidhaltiges Benzin resistent sein (so genannte Sour-Gas-Resistenz, wobei Gas für Gasoline steht), soll den üblichen Erfordernissen in Bezug auf Kälteschlag gerecht werden, und soll ausserdem einen einfachen und kostengünstigen Aufbau aufweisen. Es handelt sich dabei konkret um einen thermoplastischen Mehrschichtverbund nach Anspruch 1. Der Hohlkörper kann dabei die Form eines Mehrschichtschlauchs, eines Mehrschichtrohrs, oder eines Mehrschichtbehälters haben.

Die Lösung dieser Aufgabe wird durch die Merkmale des Anspruchs 1 erreicht.

Der Kern der Erfindung besteht somit darin, die innere Schicht und die äussere Schicht nicht wie üblich nach dem Stand der Technik auf Basis eines einzigen Polyamid-Homopolymeren oder auf Basis einer Mischung mit Polyamid-6-Copolymeren auszubilden, sondern einen Blend (eine Mischung) aus verschiedenen Polyamid-Homopolymeren, namentlich PA 6 und PA 12 mit Verträglichkeitsvermittler, zu verwenden. Überraschenderweise zeigt es sich, dass derartige Blends, welche üblicherweise als haftvermittelnde Zwischenschichten verwendet werden, auch als Innenschicht eine hervorragende Stabilität in Bezug auf Peroxid aufweisen. Ausserdem erübrigen sie häufig, da sie gute Haftungseigenschaften aufweisen, gegebenenfalls einen Haftvermittler zur Zwischenschicht, welche Zwischenschicht üblicherweise eine Sperrfunktion übernimmt. Dies erlaubt es, einfachere Strukturen bei gleicher Funktion aufzubauen. Bei Anschlüssen solcher Leitungen an Metallstutzen ist auch die Zinkchlorid-Beständigkeit der erfindungsgemässen Innenschicht ein grosser Vorteil.

Die Innenschicht enthält dabei einen Verträglichkeitsvermittler. Üblicherweise sind Mischungen, die aus verschiedenen Polyamid-Homopolymeren gemischt werden, erst stabil, wenn entsprechende Verträglichkeitsvermittler zugegeben werden.

Es handelt sich bei der Innenschicht also um eine Mischung aus zwei Komponenten, wobei es sich bei der ersten Komponente um Polyamid 6 handelt, und bei der zweiten Komponente um Polyamid 12, wobei dieser Blend gegebenenfalls zusätzlich noch weitere Komponenten (Additive) enthalten kann. Die erste Komponente aus Polyamid 6 hat dabei vorteilhafterweise einen MVR-Wert im Bereich von 20 bis 50, vorzugsweise im Bereich von 25 bis 35. Die zweite Komponente aus Polyamid 12 hat vorteilhafterweise einen MVR-Wert im Bereich von 10 bis 40, vorzugsweise einen Wert im Bereich von 15 bis 25.

Der MVR-Wert (früher auch als MVI-Wert bezeichnet) ist der Volumen-Fliessindex in cm³ pro 10 Minuten, gemessen nach einer Aufschmelzzeit von 4 Minuten und im vorliegenden Fall bei 275°C und einer Belastung von 5 kg, gemäss DIN ISO 1133:1991.

Wird eine derartige Mischung aus Polyamiden unter Zugabe eines entsprechenden Verträglichkeitsvermittlers (bei welchem es sich nicht um ein Copolyamid handelt) verarbeitet, d. h. kompoundiert oder extrudiert, so kann dies bei Temperaturen unterhalb von 280 Grad Celsius erfolgen. Bevorzugt ist eine Temperatur von kleiner oder gleich 250 Grad Celsius. Als besonders geeignet hat sich insbesondere ein Bereich zwischen 230 und 240 Grad Celsius erwiesen.

Es zeigt sich, dass ein derartiger Blend gute Eigenschaften aufweist, wenn sich die erste Komponente zur zweiten Komponente in einem Gewichtsverhältnis im Bereich von 2:3 bis 3:2 bewegt. Insbesondere bevorzugt wird ein Bereich der Gewichtsverhältnisse dieser beiden Komponenten von 2:3 bis 1:1.

Eine andere bevorzugte Ausführungsform ist dadurch gekennzeichnet, dass die Innenschicht ausserdem einen Verträglichkeitsvermittler enthält, wobei dieser in einem Anteil im Bereich von 0-30 Gewichtsteilen vorliegt, bezogen auf das Total der Gewichtsteile aus Polyamiden und Verträglichkeitsvermittler. Ganz besonders vorteilhaft ist ein Anteil von 0-20 Gewichtsteilen, insbesondere bevorzugt ein Anteil von 5-15 Gewichtsteilen. Eine weitere bevorzugte Ausführungsform ist dadurch gekennzeichnet, dass die Innenschicht einen Verträglichkeitsvermittler in einem Anteil im Bereich von 5-35 Gewichtsteilen aufweist, bezogen auf das Total der Gewichtsteile aus Polyamiden und Verträglichkeitsvermittler. Ganz besonders vorteilhaft ist ein Anteil von 8-30 Gewichtsteilen, insbesondere bevorzugt ein Anteil von 12-25 Gewichtsteilen. Als Verträglichkeitsvermittler kommen Schlagzähmodifikatoren, Elastomere oder Kautschuke in Frage. Kautschuke als Schlagzähmodifikatoren sind beispielsweise in der EP 0 654 505 A1 beschrieben und aus diesem Dokument bekannt. Sie enthalten meist einen elastomeren Anteil und mindestens eine funktionelle Gruppe, die mit einem Polyamid reagieren kann, so zum Beispiel eine Carbonsäure- oder Carbonsäureanhydridgruppe. Es können auch Mischungen von verschiedenen Schlagzähmodifikatoren als Verträglichkeitsvermittler Anwendung finden. Als besonders geeignet haben sich säuremodifizierte Ethylen/α-Olefin-Copolymere erwiesen. Als weitere Additive für die innere Schicht kommen ausserdem Flammschutzzusätze, Pigmente, Stabilisatoren, Verstärkungsmittel (z. B. Glasfasern), Weichmacher oder auch Zusätze zur Gewährleistung einer elektrischen Leitfähigkeit, d.h. antistatische Additive (z. B. Leitruss oder Karbonfasern oder Graphitfibrillen) in Frage. Diese Additive machen aber bevorzugtermassen insgesamt nicht mehr als 50 Gewichts-% der gesamten Formmasse aus, wobei Flammschutzmittel bis zu 15 Gewichts-% ausmachen können.

Durch die inhärent guten Hafteigenschaften der gewählten Mischungen aus verschiedenen Polyamid-Homopolymeren ist es möglich, wie dies in einer weiteren bevorzugten Ausführungsform beschrieben wird, die Innenschicht unmittelbar an die Zwischenschicht grenzen zu lassen. Bei einer geeigneten Ausgestaltung der Aussenschicht, namentlich aus einem identischen oder ähnlichen Gemisch aus verschiedenen Polyamid-Homopolymeren wie die Innenschicht, ist es auch möglich, die Zwischenschicht unmittelbar an die Aussenschicht grenzen zu lassen.

Gemäss einer anderen bevorzugten Ausführungsform ist der Mehrschichtverbund als Rohr ausgebildet. So beispielsweise, wenn er als Benzinleitung oder allgemein als Kraftstoffleitung verwendet werden soll. Beim Rohr kann es sich auch um einen Einfüllstutzen oder ein Benzinsystem-Entlüftungsrohr handeln. Die Rohre können glatt oder zumindest in Teilabschnitten gewellt sein. Die Bezeichnung Schlauch statt Rohr wird gelegentlich bei weichgemachten und hochflexiblen Polymertypen verwendet.

Bevorzugt ist auch eine Ausführung des erfindungsgemässen Mehrschichtverbunds als Behälter, z. B. als Kraftstoffkanister oder als Kraftstofftank.

Die Zwischenschicht, welche typischerweise die Funktion einer Barriere übernimmt, auf der Basis von Ethylen/Vinylalkohol-Copolymeren ausgebildet werden. Bevorzugt werden in einer derartigen Zwischenschicht zusätzlich Additive vorgesehen, um die mechanischen Eigenschaften wie Schlagzähigkeit (insbesondere Kälteschlag), Spannungsrissbeständigkeit, Reissdehnung zu verbessern.

In Bezug auf die Aussenschicht ist diese aus einer Mischung auf Basis von verschiedenen Polyamid-Homopolymeren gebildet, wobei es sich um zwei verschiedene Polyamide handelt, und wiederum als erste Komponente Polyamid 6verwendet wird, und als zweite Komponente Polyamid 12. Mit anderen Worten, es ist möglich und ausserdem vorteilhaft, die Aussenschicht aus einem gleichen oder ähnlichen Material auszubilden wie die Innenschicht. Dann, wenn die Aussenschicht aus einer Mischung auf Basis von Polyamid 6 und von Polyamid 12 gebildet wird, stellt sich eine sehr gute Resistenz in Bezug auf Zinkchlorid ein, welche im Zusammenhang mit der Verwendung als Benzinleitung in Automobilen wichtig ist. Denn im Winter kann sich aus Streusalz und zinkhaltigen Metallteilen am Automobil Zinkchlorid bilden, das z. B. reines Polyamid 6 angreift.

Bevorzugtermassen ist in der Mischung die erste Komponente (Polyamid 6) im Verhältnis zur zweiten Komponente (Polyamid 12) in einem Gewichtsverhältnis von 2:3 bis 3:2 vorhanden, bevorzugt in einem Gewichtsverhältnis von 2:3 bis 1:1.

Die Aussenschicht enthält ausserdem einen Verträglichkeitsvermittler, bevorzugt in einem Anteil im Bereich von 0-30 Gewichtsteilen, bezogen auf das Total der Gewichtsteile aus Polyamiden und Verträglichkeitsvermittler. Als besonders vorteilhaft erweist es sich, einen Anteil von 0-20 Gewichtsteilen vorzusehen, insbesondere bevorzugt ist ein Anteil von 5-15 Gewichtsteilen. In Frage kommen als Verträglichkeitsvermittler die bereits im Zusammenhang mit der Innenschicht weiter oben genannten, d.h. Schlagzähmodifikatoren, Elastomere oder Kautschuke, insbesondere bevorzugt säuremodifizierte Ethylen/α-Olefin-Copolymere.

Weitere bevorzugte Ausführungsformen des thermoplastischen Mehrschichtverbundes sind in den abhängigen Ansprüchen beschrieben.

Des Weiteren betrifft die vorliegende Erfindung ein Verfahren zur Herstellung eines thermoplastischen Mehrschichtverbundes, wie er oben angegeben ist. Bei diesem Verfahren werden bevorzugt die Innenschicht, die Zwischenschicht sowie die Aussenschicht und gegebenenfalls weitere Zwischenschichten in einem Koextrusionsprozess zusammengefügt, wobei das Extrudat z. B. zu einem Rohr respektive einer Leitung oder einem Behälter geformt wird. Dies kann kontinuierlich oder diskontinuierlich (z. B. durch Extrusionsblasformen) geschehen.

Ausserdem geht es in der vorliegenden Schrift um eine Verwendung eines thermoplastischen Mehrschichtverbundes, wie er oben beschrieben ist, bevorzugt als Kraftstoffleitung insbesondere für flüssige Kraftstoffe wie Benzin oder Diesel beispielsweise bei Verbrennungsmotoren. Weitere bevorzugte Verwendungen im Kraftfahrzeugbereich sind Tankeinfüllstutzen, Kraftstoffsystem-Entlüftungsleitungen oder Kurbelgehäuse-Entlüftungsleitungen.

### KURZE ERLÄUTERUNG DER FIGUREN

Die Erfindung soll nachfolgend anhand von Ausführungsbeispielen im Zusammenhang mit der Zeichnung näher erläutert werden. Es zeigt:

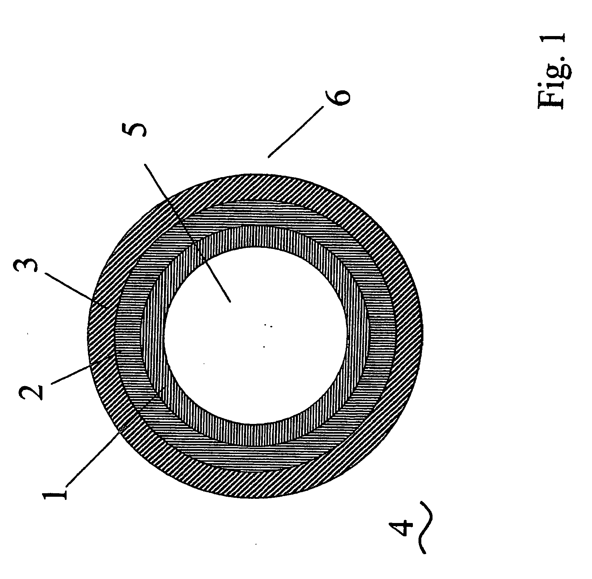

Fig. 1 einen axialen Schnitt durch eine Kraftstoffleitung mit einem Mehrschichtaufbau.

### WEGE ZUR AUSFÜHRUNG DER ERFINDUNG

Fig. 1 zeigt einen allgemeinen Aufbau einer Kraftstoffleitung aus einem thermoplastischen Mehrschichtverbund 4, welche als Ausführungsbeispiel für die vorliegende Erfindung dienen soll. Die Leitung umfasst einen Innenraum 5, welcher nach aussen zunächst von einer Innenschicht 1 umschlossen ist. Unmittelbar an die Innenschicht 1 grenzt eine Zwischenschicht 2, welche üblicherweise eine Barrierefunktion respektive Sperrschichtfunktion übernimmt. Die Kraftstoffleitung wird zum Aussenraum 6 durch eine Aussenschicht 3 begrenzt, welche unmittelbar an die Zwischenschicht 2 grenzt.

Ein derartiger einfacher Aufbau aus nur 3 Schichten wird ermöglicht, wenn als Innenschicht 1 ein polymerer Werkstoff verwendet wird, welcher einerseits bereits genügende Hafteigenschaften aufweist, um mit der Zwischenschicht 2 eine stabile Verbindung einzugehen, und welcher andererseits eine genügende chemische Resistenz zu den im Innenraum 5 zu fördernden Brennstoffen aufweist. Nach dem Stand der Technik, wie er beispielsweise in der DE 101 10 964 A1 beschrieben ist, werden nämlich typischerweise für derartige Anwendungen thermoplastische Mehrschichtverbundsysteme verwendet, welche mindestens vier oder fünf Schichten aufweisen.

Erfindungsgemäss wird vorgeschlagen, für die Innenschicht 1 eine Mischung auf Basis von verschiedenen Polyamid-Homopolymeren zu verwenden. Es handelt sich dabei bevorzugt um eine Mischung aus Polyamid 6 und Polyamid 12. Ein derartiger Blend, welcher typischerweise bis anhin als Haftvermittler Verwendung fand, erweist sich überraschenderweise als stabil gegenüber Brennstoffen und möglicherweise darin enthaltener Additive oder häufig ebenfalls enthaltener weiterer Komponenten wie Peroxide (so genannte Sour-Gas-Beständigkeit), etc. Ausserdem kann diese vorgeschlagene Schicht direkt an eine Zwischenschicht 2 angrenzend ausgebildet sein, da sie bereits inhärent genügende Hafteigenschaften zu typischen Zwischenschichten 2 aufweist.

Als Material für die Innenschicht 1 wurde beim Ausführungsbeispiel eine Mischung aus 45 Gewichts-% Polyamid 6 und 45 Gewichts-% Polyamid 12 bei 10% eines säuremodifizierten Ethylen/α-Olefin-Copolymers als Verträglichkeitsvermittler sowie Stabilisatoren verwendet. Es wird in der Folge mit GRILAMID^{®} XE 3850 bezeichnet, und ist unter diesem Namen bei der EMS-CHEMIE AG, Domat/Ems, Schweiz, erhältlich.

Die verwendeten Materialien wurden zur weiteren Charakterisierung in Bezug auf den Volumen-Fliessindex MVR (Melt Volume Rate; früher MVI, Melt Volume Index) untersucht. Der MVR-Wert ist der Volumen-Fliessindex in cm³ pro 10 Minuten, gemessen nach einer Aufschmelzzeit von 4 Minuten bei 275°C und einer Belastung von 5 kg, und wurde nach DIN ISO 1133: 1991 gemessen. Diese Messungen wurden sowohl bei der vorgeschlagenen Mischung GRILAMID^{®} XE 3850 für die Innenschicht als auch bei den Ausgangsprodukten zur Herstellung einer derartigen Mischung durchgeführt.

Die Komponente aus Polyamid 6 (erste Komponente des Blend) für sich allein hat dabei einen MVR-Wert im Bereich von 20 bis 50, vorzugsweise im Bereich von 25 bis 35. Die Komponente aus Polyamid 12 (zweite Komponente des Blend) für sich allein hat einen MVR-Wert im Bereich von 10 bis 40, vorzugsweise einen Wert im Bereich von 15 bis 25.

Die Mischung (Blend inklusive Verträglichkeitsvermittler und Stabilisatoren, GRILAMID^{®} XE 3850) hat einen MVR-Wert im Bereich von 5 bis 20, bevorzugt wird dabei ein Bereich von 5 bis 15.

Alternativ kann auch ein unter dem Namen GRILAMID^{®} XE 3795 bei der EMS-CHEMIE AG, Domat/Ems, Schweiz, erhältliches Gemisch verwendet werden (Produkt-Bezeichnung nach ISO 1874: PA12/PA6/X, EG, 18-020).

Als Material für die Zwischenschicht 2 (Barriere- und Inhibitorschicht) wurde ein Ethylen/Vinylalkohol-Copolymer (EVOH) verwendet. Konkret handelte es sich beim Ausführungsbeispiel um ein Produkt der Firma KURARAY, welches unter dem Namen EVAL^{®} unter der Produktkennzeichnung F101A erhältlich ist und einen Ethylen-Gehalt von 32 mol-% aufweist. Es ist in Europa erhältlich bei der Firma EVAL Europe N.V. in Zwijindrecht, Belgien.

Die Zwischenschicht 2 kann durch Beimischung eines Copolyamides in Bezug auf die Tendenz zu Spannungsrissen verbessert werden. Eine derartige Beimischung ist beispielsweise in der eingangs bereits angeführten JP 07-308996 erläutert, und der Inhalt dieser Schrift wird in Bezug auf die Beimischung eines Copolyamides explizit an dieser Stelle eingeschlossen. Es zeigt sich, dass insbesondere in Kombination mit einer erfindungsgemässen Innenschicht 1 auf Basis eines Blends von Polyamid-Homopolymeren eine derartige Beimischung eines Copolyamides oder einer Mischung von Copolyamiden zur Zwischenschicht aus EVOH wesentlich verbesserte Spannungsrisseigenschaften erhalten werden können, wobei aber die Barrierewirkung abnimmt.

Als Material für die Aussenschicht 3 wird beim Ausführungsbeispiel das gleiche Material wie für die Innenschicht 1 verwendet, d. h. GRILAMID^{®} XE 3850. Es ist aber auch möglich, als Aussenschicht andere Materialien zu verwenden. Es zeigt sich, dass insbesondere bei Verwendung des genannten GRILAMID^{®} XE 3850 eine sehr hohe Zinkchloridbeständigkeit erreicht werden kann.

Bevorzugte Ausführungsformen des erfindungsgemässen Mehrschichtverbunds sind antistatisch ausgerüstet, indem die Innenschicht 1 auf Basis des Polyamid-Blends von Schicht 1 Zusätze enthalten, die sie elektrisch leitfähig machen. Bevorzugte elektrisch leitfähige Zusätze sind Leitruss, Karbonfasern oder Graphitfibrillen.

Ein Rohr respektive eine Leitung wie sie in Fig. 1 dargestellt ist, wird in einem Koextrusionsprozess hergestellt, in welchem die einzelnen Schichten im wesentlichen gleichzeitig als ein Mehrschichtverbund extrudiert werden. Der Koextrusionsprozess wird dann besonders einfach, wenn die Leitung nur drei Schichten aufweist und zudem das Material für die Innen -und Aussenschicht identisch ist.

Zur Überprüfung der Eigenschaften wurden folgende Ausführungsbeispiele (Varianten 1-5) tatsächlich ausgemessen:

**Tabelle 1: Rohre 8x1 mm (8mm Aussendurchmesser, 1mm Wanddicke)**

| | **Innenschicht (1)** | **Zwischenschicht (2)** | **Zwischenschicht** | **Aussenschicht (3)** |
|---|---|---|---|---|
| **Variante 1** | Grilon R50 HNZ | EVOH (EVAL) | | Grilon ELX 50 HNZ |
| | 0.50mm | 0.20mm | | 0.30mm |
| **Variante 2** | Grilon R47 HW | EVOH (EVAL) | | Grilon ELX23 NZ |
| | 0.40mm | 0.20mm | | 0.40mm |
| **Variante 3** | Grilon R47 HW | EVOH (EVAL) | Haftvermittler | Grilamid L25 W20X |
| | 0.40mm | 0.20mm | | 0.40mm |
| **Variante 4** | Grilamid XE 3850 | EVOH (EVAL) | | Grilamid XE 3850 |
| | 0.40mm | 0.20mm | | 0.40mm |
| **Variante 5** | Grilamid XE 3850 | EVOH (EVAL) | | Grilamid XE 3850 |
| | 0.40mm | +20% Grilon CF7 | | 0.40mm |
| | | 0.20mm | | |

Bei den Varianten 1 bis 3 handelt es sich um Beispiele nach dem Stand der Technik, während die Varianten 4 und 5 erfindungsgemässe Beispiele sind. Das bevorzugte Ausführungsbeispiel ist Variante 4. Variante 5 beschreibt die Beimischung eines Copolyamides zur Spannungsrissverminderung der Schicht aus EVOH (EVAL^{®} von KURARAY, vgl. weiter oben).

Die im Zusammenhang mit diesen Ausführungsbeispielen verwendeten Materialien sind wie folgt:

GRILON^{®} R 50 H NZ ist ein hitzestabilisierter, hochviskoser, unverstärkter, schlagzähmodifizierter Polyamid 6-Extrusionsblasformtyp (Produkt-Bezeichnung nach ISO 1874: PA 6-HI, GH, 34-020). Er ist erhältlich bei der EMS-CHEMIE AG in Domat/Ems, Schweiz. Er verfügt über eine sehr hohe Schmelzefestigkeit, eine hohe Schlagzähigkeit auch bei tiefen Temperaturen und ist für sequenzielles und konventionelles Extrusionsblasformen in Kombination mit flexiblen Typen geeignet.

GRILON^{®} ELX 50 H NZ ist ein hitzestabilisiertes, hochviskoses, schlagzähes Polyamid 6-Elastomer für Extrusionsblasformanwendungen (Produkt-Bezeichnung nach ISO 1874: PA 6/X-HI, BGH, 32-002). Es ist erhältlich bei der EMS-CHEMIE AG in Domat/Ems, Schweiz. Es verfügt über eine sehr hohe Schmelzefestigkeit, eine hohe Schlagzähigkeit auch bei tiefen Temperaturen und ist für sequenzielles und konventionelles Extrusionsblasformen geeignet.

GRILON^{®} R 47 HW ist ein hitzestabilisiertes, hochviskoses, weichmacherhaltiges, schlagzähes Polyamid 6 für Extrusionsanwendungen (Produkt-Bezeichnung nach ISO 1874/1 : PA 6-P, EHP, 27-005). Es ist erhältlich bei der EMS-CHEMIE AG in Domat/Ems, Schweiz. Es verfügt über eine sehr hohe Schmelzefestigkeit, eine hohe Schlagzähigkeit auch bei tiefen Temperaturen und ist für sequenzielles und konventionelles Extrusionsblasformen geeignet.

GRILON^{®} ELX 23 NZ ist ein hitzestabilisiertes, hochviskoses, schlagzähes, thermoplastisches Polyamid 6-Elastomer für Extrusionsblasformanwendungen (Produkt-Bezeichnung nach ISO 1874: PA 6/X HI, EGR, 12002N). Es ist erhältlich bei der EMS-CHEMIE AG in Domat/Ems, Schweiz. Es verfügt über eine sehr hohe Schmelzefestigkeit, eine hohe Schlagzähigkeit auch bei tiefen Temperaturen und ist für sequenzielles und koextrudiertes Extrusionsblasformen geeignet.

GRILAMID^{®} L 25 W 20 X ist ein halbflexibler, weichmacherhaltiger, hochviskoser Extrusionstyp auf Basis von Polyamid 12. Er ist schlagzähmodifiziert und hitzestabilisiert (Produkt-Bezeichnung nach ISO 1874: PA 12-HIP, EHL, 22-005). Er ist erhältlich bei der EMS-CHEMIE AG in Domat/Ems, Schweiz. Es verfügt über eine sehr hohe Schlagzähigkeit auch bei tiefen Temperaturen, ist halbflexibel, verfügt über eine gute Chemikalienbeständigkeit, hat eine niedrige Dichte und ist sehr gut zu verarbeiten.

GRILON^{®} CF 7 ist ein Copolyamid 6/12 mit einem tiefen Schmelzpunkt (Produkt-Bezeichnung nach ISO 1874: PA6/12, FT, 18-010). Es ist erhältlich bei der EMS-CHEMIE AG in Domat/Ems, Schweiz. Es verfügt über eine hohe Flexibilität und Zähigkeit, eine gute Transparenz, einen tiefen Schmelzpunkt sowie gute Tiefzieh- und Orientierbarkeit. Es verfügt über einen Polyamid 6-(Caprolactam-)Anteil von 55 Gewichts-%.

Die genannten Varianten 1 bis 5 wurden einerseits jeweils einem Zinkchloridtest unterzogen, und andererseits einem Sour-Gas Test. Dabei wurden die in diesem Gebiet üblichen Spezifikationen gemäss SAE XJ 2260 sowie gemäss Ford WSS-M 98D33-A3 verwendet.

### Zinkchloridtest:

Test nach SAE XJ 2260 Absatz 7.5, Resistance to Zinc Chloride, respektive Ford WSS-M 98D33-A3 Absatz 3.4.5, Resistance to Zinc Chloride.

Berstdruckprüfung (hier bei Raumtemperatur=RT gemessen):

**Tabelle 2**

| | Berstdruck | Angeliefert | SAEJ2260, Behandlung: 200 h bei RT | Ford, Behandlung: 200h bei 60°C Minimalerfordernis: 41.4 bar |
|---|---|---|---|---|
| **Variante 1** | [bar] | 101.0 | 86.4 | 98.6 |
| **Variante 2** | [bar] | 114.1 | 100.5 | Nicht bestanden |
| **Variante 3** | [bar] | 122.4 | 108.5 | Nicht bestanden |
| **Variante 4** | [bar] | 124.5 | 124.7 | 160.8 |
| **Variante 5** | [bar] | 120.6 | 95.2 | 133.0 |

Die in der mit " Angeliefert " bezeichneten Kolonne angegebenen Werte beziehen sich auf die entsprechend identischen Leitungen ohne Vorbehandlung mit Zinkchlorid.

Es kann klar erkannt werden, dass das bevorzugte Ausführungsbeispiel, d. h. Variante 4, herausragende Eigenschaften bezüglich der Varianten 1 bis 3 gemäss Stand der Technik aufweist.

### Sour-Gas Test:

Test nach SAE XJ 2260 Absatz 7.8, Auto-Oxidized Gasoline, respektive Ford WSS-M 98D33-A3 Absatz 3.4.10, Oxidized Fuel Resistance (Sour Gas).

Kälteschlag-Test (Schlagtest immer bei -40 Grad Celsius):

**Tabelle 3**

| | Schlagprüfung | Angeliefert | SAEJ2260, PN 90 Behandlung: 1000 h bei 40 °C | Ford, PN 180 Behandlung: 360 h bei 60°C |
|---|---|---|---|---|
| **Variante 1** | [ % ] | Ohne Bruch | 80 % Bruch | Ohne Bruch |
| **Variante 2** | [ % ] | Ohne Bruch | 90 % Bruch | Ohne Bruch |
| **Variante 3** | [ % ] | Ohne Bruch | 90% Bruch | 80% Bruch |
| **Variante 4** | [ % ] | Ohne Bruch | 10 % Bruch | 10 % Bruch |
| **Variante 5** | [ % ] | Ohne Bruch | 20 % Bruch | 10 % Bruch |

Auch unter diesen Bedingungen kann die Überlegenheit der bevorzugten Variante 4 erkannt werden.

Weitere wesentliche Eigenschaften wurden an einem Rohr ausschliesslich aus GRILAMID^{®} XE 3850 sowie an einem Rohr gemäss Variante 4, konkret jeweils an einem 8 x 1 mm Rohr (d.h. Aussendurchmesser 8 mm und Wanddicke 1 mm), gemessen, und sind in Tabelle 4 zusammengefasst:

**Tabelle 4**

| **Eigenschaft** | **Messbedingung** | **Einheit** | **XE 3850** | | **Variante** 4 | |
|---|---|---|---|---|---|---|
| | | | | **VS*** | | **VS*** |
| Berstdruck nach DIN73378 | Bei 23 °C | [bar] | 110 | 38.5 | 124.5 | 43.6 |
| | Bei 80 °C | [bar] | 40.8 | 14.3 | 48.2 | 16.9 |
| | Bei 120 °C | [bar] | 30.5 | 10.7 | n.g.** | |
| Berstdruck nach SAEJ844d | Bei 23 °C | [bar] | 104.2 | | n.g.** | |
| | Nach ZnCl bei RT 200h SAEJ844 d (Anforderung 75% of RT Burst) | [bar] | 96.0 | | 124.7 | |
| Kälteschlag gemäss SAEJ2260 | Bei -40 °C | [ ] | Ohne Bruch | | Ohne Bruch | |
| Zugversuch | Max. Zugspannung | [MPa] | 38.0 | | 43.5 | |
| | Streckdehnung | [%] | 12.0 | | 8.9 | |
| | Streckspannung | [MPa] | 36.9 | | 43.1 | |
| | Bruchspannung | [MPa] | 36.9 | | 39 | |
| | Bruchdehnung | [%] | 166.9 | | 148.5 | |

| | | | | | | |
|---|---|---|---|---|---|---|
| * Die Vergleichsspannung (VS) in MPa als eine von den Rohrdimensionen unabhängige Grösse wurde aus dem Berstdruck des Rohrs jeweils unter Verwendung der Formel aus Abschnitt 3.2 von DIN 73378: 1996-02 ermittelt. ** n.g.: nicht gemessen | | | | | | |

Es zeigt sich, dass sämtliche Anforderungen gemäss DIN 73378 erfüllt werden. Die in Tabelle 4 aufgeführte Variante 4 erfüllt insbesondere den Zinkchloridtest nach SAEJ844 d. Die in Tabelle 1 aufgeführten Varianten 1-3 nach dem Stand der Technik erfüllen diese Anforderung nicht.

Ausgehend von der erfindungsgemässen Variante 4 wurden in Untervarianten Variationen der Blendanteilsmengen untersucht. In der Versuchsreihe mit den nun folgenden Bezeichnungen Z6504 - Z6510 für die Blendmaterialmischungen resp. A bis G für daraus hergestellte Mehrschichtrohre entspricht die Variante Z6506 resp. C der bisherigen Variante 4.

Folgende Untersuchungen wurden am Blend durchgeführt: Blendvarianten Z6504 bis Z6510 mit unterschiedlichen Anteilen PA12 und PA6 sowie unterschiedlichen Anteilen von Verträglichkeitsvermittler auf Polyolefin-Basis, wie dies in Tabelle 5 zusammengestellt ist. Zudem wurde bei allen Blends ein Hitzestabilisator eingesetzt.

**Tabelle 5:**

| Blendmaterialbezeichnung | | | **Z6504** | **Z6505** | **Z6506** | **Z6507** | **Z6508** | **Z6509** | **Z6510** |
|---|---|---|---|---|---|---|---|---|---|
| GRILAMID L25 NAT. | | Gew.-% | 35.7 | 40.18 | 44.65 | 49.12 | 53.6 | 42.15 | 39.65 |
| GRILON A34 | | Gew.-% | 53.6 | 49.12 | 44.65 | 40.18 | 35.7 | 42.15 | 39.65 |
| Verträglichkeitsvermittler | | Gew.-% | 10 | 10 | 10 | 10 | 10 | 15 | 20 |
| | | | | | | | | | |
| MVR | 275°C/ 5kg | cm³/ 10min | 12 | 11 | 12 | 9 | 10 | 9 | 5 |
| Impact Charpy new | | kJ/m² | o.B.* | o.B.* | o.B.* | o.B.* | o.B.* | o.B.* | o.B.* |
| Notched impact Charpy new | | kJ/m² | 65 | 65 | 57 | 50 | 49 | 75 | 84 |
| Notched impact Charpy new | -30°C | kJ/m² | 14 | 14 | 14 | 13 | 12 | 22 | 33 |

| | | | | | | | | | |
|---|---|---|---|---|---|---|---|---|---|
| *o.B.: ohne Bruch | | | | | | | | | |

Die Methoden Impact Charpy new sowie Notched impact Charpy new sind in der DIN EN ISO 179 spezifiziert.

Bei der Komponente GRILAMID L25 NAT. handelt es sich um Grilamid L25 natur. Dies ist ein hochviskoses, unverstärktes Polyamid 12 Polymer für Extrusionsanwendungen. (Produkt-Bezeichnung nach ISO 1874/1: PA12, E, 24-010). Es ist erhältlich bei der EMS-Chemie AG in Domat/Ems, Schweiz.

Bei der Komponente Grilon A34 handelt es sich um ein mittelviskoses, unverstärktes Polyamid 6 Polymer, das für Extrusionsanwendungen eingesetzt werden kann. (Produkt-Bezeichnung nach ISO 1874/1: PA6, F, 22-030). Es ist erhältlich bei der EMS-Chemie AG in Domat/Ems, Schweiz.

Als Verträglichkeitsvermittler wurde hier ein besonderes säuremodifiziertes Ethylen/α-Olefin-Copolymer eingesetzt, nämlich ein mit Maleinsäureanhydrid gepfropftes Ethylen-Propylen-Copolymer. Sein MVR-Wert (gemessen bei 275°C/5kg) lag bei 13 cm³/10min, und sein DSC-Schmelzpunkt bei 55°C.

Aus den Blends Z6504 - Z6510 wurden zu Testzwecken Mehrschichtrohre A bis G hergestellt, wie sie in Tabelle 6 definiert sind:

**Tabelle 6:**

| **Mehrschichtrohre 8x1 mm** | **Innenschicht** **0.425 mm** | **Zwischenschicht** **0.15 mm** | **Aussenschicht** **0.425 mm** |
|---|---|---|---|
| **Variante A** | Grilon Z-6504 | EVOH F101-A | Grilon Z-6504 |
| **Variante B** | Grilon Z-6505 | EVOH F101-A | Grilon Z-6505 |
| **Variante C** | Grilon Z-6506 | EVOH F101-A | Grilon Z-6506 |
| **Variante D** | Grilon Z-6507 | EVOH F101-A | Grilon Z-6507 |
| **Variante E** | Grilon Z-6508 | EVOH F101-A | Grilon Z-6508 |
| **Variante F** | Grilon Z-6509 | EVOH F101-A | Grilon Z-6509 |
| **Variante G** | Grilon Z-6510 | EVOH F101-A | Grilon Z-6510 |

Die Mehrschichtrohre gem. Tabelle 6 wurden Kälteschlag sowie Berstdruck-Tests unterzogen, wie sie im Standard SAE XJ 2260 in den Kapiteln 7.6 und 7.1 definiert sind. Die Kälteschlag- und Berstdruck-Ergebnisse gem. SAE XJ 2260 der Rohrvarianten A-G sind in Tabelle 7 zusammengestellt:

**Tabelle 7:**

| Rohrvariante | Kälteschlag [% Bruch] 0% Bruch erforderlich | Berstdruck [% von Originalwert] (75% Mindestanforderung) |
|---|---|---|
| A | 20 | 98 |
| B | 10 | 97 |
| C | 10 | Nicht gemessen |
| D | 20 | 96 |
| E | 50 | Nicht gemessen |
| F | 0 | 97 |
| G | 0 | 96 |

Die erfindungsgemässe Variante C zeigt Vorteile gegenüber Varianten mit erhöhtem Anteil einer Blendkomponente, wie z. B. A oder E. Bevorzugt sind hier Varianten B, C, D, und besonders bevorzugt sind Varianten F, G, die beim SAE Kälteschlag keinen Bruch aufzeigen. Diese Varianten haben einen gleichen Anteil beider Blendkomponenten mit einem erhöhten Anteil von Verträglichkeitsvermittler.

### Ergebnisse Sourgas-Test der Rohrvarianten A-G:

Test nach SAE XJ 2260 Absatz 7.8, Auto-Oxidized Gasoline, respektive Ford WSS-M 98D33-A3 Absatz 3.4.10, Oxidized Fuel Resistance (Sour Gas). Hier wird der Kälteschlag nach dem Sourgas-Test mit nachfolgendem Berstdruck-Test durchgeführt, die Resultate der Varianten A-G sind in Tabelle 8 zusammengestellt. Der SAE-Sourgas-Test wurde nach SAE XJ 2260 mit PN = 90, 40°C, 1000h durchgeführt, wobei PN = Peroxidnummer. Sourgas-Test nach Ford: Mit PN = 180, 336h, 60°C.

**Tabelle 8:**

| | **SAE Sourgas Test** | | **Ford Sourgas Test** | |
|---|---|---|---|---|
| Rohrvariante | Kälteschlag [% Bruch] 0% Bruch erforderlich | Berstdruck [% von Originalwert] (75% Mindestanforderung) | Kälteschlag [% Bruch] 0% Bruch erforderlich | Berstdruck [% von Originalwert] |
| A | 30 | 91 | 0 | 89 |
| B | 50 | 86 | 60 | 84 |
| C | 10 | Nicht gemessen | 10 | Nicht gemessen |
| D | 10 | 80 | 10 | 84 |
| E | Nicht gemessen | Nicht gemessen | Nicht gemessen | Nicht gemessen |
| F | 0 | 82 | 0 | 81 |
| G | 0 | 81 | 0 | 79 |

Die erfindungsgemässe Variante C zeigt wiederum Vorteile gegenüber Varianten mit erhöhtem Anteil einer Blendkomponente, wie z. B. A oder E. Bevorzugt sind hier Varianten C, D und besonders bevorzugt sind Varianten F, G, die beim Kälteschlag keinen Bruch aufzeigen. Zudem liegen alle nach SAE gemessenen Varianten über dem geforderten 75% Wert des Original-Berstdruckes bei RT.

Diese Varianten F und G haben einen höheren Verträglichkeitsvermittler-Anteil von 15 und 20 Gew.-% wobei 20 Gew.-% besonders bevorzugt sind. Auf Gewichtsteile umgerechnet (bezogen auf das Total der Gewichtsteile aus Polyamiden und Verträglichkeitsvermittler) ergeben sich bei den hier vorliegenden kleinen Additivmengen ungefähr dieselben Zahlenwerte für den Verträglichkeitsvermittler-Anteil.

Haftung der verschiedenen Blendvarianten zu EVOH: alle Varianten zeigen > 20 N/cm und lassen sich nur mit Mühe trennen, wobei dann der Mehrschichtverbund nicht an den Grenzflächen reisst, sondern innerhalb der einzelnen Schichten. Deshalb kann die Haftung der Schichten nicht gemessen werden.. Dies zeigt, dass die Blendvarianten, nebst den oben aufgezeigten guten mechanischen Werten, auch eine gute Schichtverbundhaftung aufweisen.

### BEZUGSZEICHENLISTE

- 1: Innenschicht
- 2: Zwischenschicht
- 3: Aussenschicht
- 4: thermoplastischer Mehrschichtverbund
- 5: Innenraum
- 6: Aussenraum

## Patentansprüche

1. Thermoplastischer Mehrschichtverbund (4) aus nur drei Schichten in Form eines Hohlkörpers aufgebaut aus einer Innenschicht (1) auf Basis von Polyamiden, einer Zwischenschicht (2) sowie einer thermoplastischen Aussenschicht (3), wobei die Zwischenschicht (2) auf der Basis von Ethylen/Vinylalkohol-Copolymeren (EVOH) ausgebildet ist, und wobei die Innenschicht (1) unmittelbar an die Zwischenschicht (2) grenzt,
**dadurch gekennzeichnet, dass**
die Innenschicht (1) aus einer Mischung aus den zwei Polyamid-Homopolymeren Polyamid 6 und Polyamid 12 gebildet ist, und einen Verträglichkeitsvermittler enthält,
wobei die Zwischenschicht (2) unmittelbar an die Aussenschicht (3) grenzt,
wobei die Aussenschicht (3) aus einer Mischung aus den zwei Polyamid-Homopolymeren Polyamid 6 und Polyamid 12 gebildet ist, und einen Verträglichkeitsvermittler enthält.

2. Thermoplastischer Mehrschichtverbund (4) nach Anspruch 1, **dadurch gekennzeichnet, dass** die Innenschicht (1) bzw. das Material für die Innenschicht (1) hergestellt worden ist bei einer Kompoundiertemperatur von höchstens 280 Grad Celsius und bei einer Extrusionstemperatur von höchstens 280 Grad Celsius.

3. Thermoplastischer Mehrschichtverbund (4) nach Anspruch 2, **dadurch gekennzeichnet, dass** die Kompoundiertemperatur respektive die Extrusionstemperatur bei höchstens 250 Grad Celsius liegt, bevorzugt im Bereich von 230 Grad Celsius bis 240 Grad Celsius.

4. Thermoplastischer Mehrschichtverbund (4) nach einem der Ansprüche 1 bis 3, **dadurch gekennzeichnet, dass** das Gewichtsverhältnis der ersten Komponente zur zweiten Komponente im Bereich von 2:3 bis 3:2 liegt, bevorzugt in einem Bereich von 2:3 bis 1:1.

5. Thermoplastischer Mehrschichtverbund (4) nach einem der vorhergehenden Ansprüche, **dadurch gekennzeichnet, dass** die Innenschicht (1) einen Verträglichkeitsvermittler in einem Anteil im Bereich von 5-15 Gewichtsteilen, bezogen auf das Total der Gewichtsteile aus Polyamiden und Verträglichkeitsvermittler, enthält.

6. Thermoplastischer Mehrschichtverbund (4) nach einem der Ansprüche 1 bis 4, **dadurch gekennzeichnet, dass** die Innenschicht (1) einen Verträglichkeitsvermittler in einem Anteil im Bereich von 5-35 Gewichtsteilen, bevorzugt in einem Anteil von 8-30 Gewichtsteilen, insbesondere bevorzugt in einem Anteil von 12-25 Gewichtsteilen, bezogen auf das Total der Gewichtsteile aus Polyamiden und Verträglichkeitsvermittler, enthält.

7. Thermoplastischer Mehrschichtverbund (4) nach Anspruch 5 oder 6, **dadurch gekennzeichnet, dass** es sich beim Verträglichkeitsvermittler um einen Schlagzähmodifikator, ein Elastomer oder einen Kautschuk, insbesondere bevorzugt um ein säuremodifiziertes Ethylen/α-Olefin-Copolymeres handelt.

8. Thermoplastischer Mehrschichtverbund (4) nach einem der vorhergehenden Ansprüche, **dadurch gekennzeichnet, dass** die Mischung der Innenschicht (1) antistatische Additive, Weichmacher, Pigmente, Stabilistatoren, Flammschutzzusätze oder Verstärkungsmittel enthält.

9. Thermoplastischer Mehrschichtverbund (4) nach einem der vorhergehenden Ansprüche, **dadurch gekennzeichnet, dass** der Mehrschichtverbund als Rohr ausgebildet ist und die Innenschicht elektrisch leitfähige Zusätze enthält.

10. Thermoplastischer Mehrschichtverbund (4) nach einem der vorhergehenden Ansprüche, **dadurch gekennzeichnet, dass** die in der mindestens einen Zwischenschicht (2) auf der Basis von Ethylen/Vinylalkohol-Copolymeren (EVOH) zusätzlich Additive vorgesehen sind, um die mechanischen Eigenschaften wie Schlagzähigkeit, Spannungsrissbeständigkeit, Reissdehnung zu verbessern.

11. Thermoplastischer Mehrschichtverbund (4) nach einem der vorhergehenden Ansprüche, **dadurch gekennzeichnet, dass** das Gewichtsverhältnis der ersten Komponente der Aussenschicht (3) zur zweiten Komponente der Aussenschicht (3) im Bereich von 2:3 bis 3:2 liegt, bevorzugt in einem Bereich von 2:3 bis 1:1.

12. Thermoplastischer Mehrschichtverbund (4) nach einem der Ansprüche 1 bis 11, **dadurch gekennzeichnet, dass** die Aussenschicht (3) einenVerträglichkeitsvermittler in einem Anteil von 5-15 Gewichtsteilen, bezogen auf das Total der Gewichtsteile aus Polyamiden und Verträglichkeitsvermittler, enthält.

13. Thermoplastischer Mehrschichtverbund (4) nach einem der Ansprüche 1 bis 11, **dadurch gekennzeichnet, dass** die Aussenschicht (3) einen Verträglichkeitsvermittler in einem Anteil im Bereich von 5-35 Gewichtsteilen, bevorzugt in einem Anteil von 8-30 Gewichtsteilen, insbesondere bevorzugt in einem Anteil von 12-25 Gewichtsteilen, bezogen auf das Total der Gewichtsteile aus Polyamiden und Verträglichkeitsvermittler, enthält.

14. Thermoplastischer Mehrschichtverbund (4) nach Anspruch 12 oder 13, **dadurch gekennzeichnet, dass** es sich beim Verträglichkeitsvermittler der Aussenschicht (3) um einen Schlagzähmodifikator, ein Elastomer oder einen Kautschuk, insbesondere bevorzugt um ein säuremodifiziertes Ethylen/α-Olefin-Copolymeres handelt.

15. Verfahren zur Herstellung eines Hohlkörpers aus einem thermoplastischen Mehrschichtverbund nach einem der Ansprüche 1 bis 14 **dadurch gekennzeichnet, dass** die Innenschicht (1), die Zwischenschicht (2) sowie die Aussenschicht (3) in einem Koextrusionsprozess insbesondere bevorzugt zu einem Rohr respektive einer Leitung oder einem Behälter zusammengefügt werden.

16. Verwendung eines thermoplastischen Mehrschichtverbundes (4) nach einem der Ansprüche 1 bis 14 als Kraftstoffleitung insbesondere für flüssige Kraftstoffe wie Benzin oder Diesel beispielsweise bei Verbrennungsmotoren.

17. Verwendung eines thermoplastischen Mehrschichtverbundes (4) nach einem der Ansprüche 1 bis 14 als Tankeinfüllstutzen, Kraftstoffsystem-Entlüftungsleitung, oder Kurbelgehäuse-Entlüftungsleitung.

## Claims

1. Thermoplastic multilayer composite (4) of three layers only in the form of a hollow body built of one inner layer (1) on the basis of polyamides, one intermediate layer (2) as well as one thermoplastic outer layer (3), wherein the intermediate layer (2) is provided on the basis of ethylene/vinyl alcohol-copolymer (EVOH), and wherein the inner layer (1) is located immediately adjacent to the intermediate layer (2),
**characterized in that**
the inner layer (1) is formed from a mixture on the basis of the two polyamide-homopolymers polyamide 6 and polyamide 12 and comprises a compatibilizer,
wherein the intermediate layer (2) is located immediately adjacent to the outer layer (3)
wherein the outer layer (3) is made of a mixture from the two polyamide-homopolymers polyamide 6 and polyamide 12 and comprises a compatibilizer.

2. Thermoplastic multilayer composite (4) according to claim 1, **characterized in that** the inner layer (1), or the material for the inner layer (1), respectively, is produced at a compounding temperature of at most 280°C and at an extrusion temperature of at most 280°C.

3. Thermoplastic multilayer composite (4) according to claim 2, **characterized in that** the compounding temperature and/or the extrusion temperature, respectively, are at most 250°C, preferably in a range between 230°C to 240°C.

4. Thermoplastic multilayer composite (4) according to one of the claims 1 to 3, **characterized in that** the weight ratio of the first component to the second component is in a range between 2: 3 to 3: 2, preferably in a range between 2: 3 to 1: 1.

5. Thermoplastic multilayer composite (4) according to any of the preceding claims, **characterised in that** the inner layer (1) comprises a compatibilizer in a proportion of in the range of 5-15 parts in weight, with reference to the total of parts in weight of polyamides and compatibilizer.

6. Thermoplastic multilayer composite (4) according to one of the claims 1-4, **characterized in that** the inner layer (1) comprises a compatibilizer in a proportion in the range of 5-35 parts in weight, preferably in a proportion of 8-30 parts in weight, and particularly preferably in a proportion of 12-25 parts in weight, with reference to the total of parts in weight of polyamides and compatibilizer.

7. Thermoplastic multilayer composite (4) according to claim 5 or 6, **characterized in that** the compatibilizer is an impact strength modifier, an elastomer or a rubber, preferably an acid-modified ethylene/α-olefin-copolymer.

8. Thermoplastic multilayer composite (4) according to one of the preceding claims, **characterized in that** the mixture of the inner layer (1) comprises anti-static additives, softeners, pigments or strengthening agents.

9. Thermoplastic multilayer composite (4) according to one of the preceding claims, **characterized in that** the multilayer composite is provided as a tube, and wherein the inner layer or a supplementary innermost layer on the basis of a polyamide blend comprises electrically conductive additives.

10. Thermoplastic multilayer composite (4) according to one of the preceding claims, wherein preferentially in the intermediate layer (2) on the basis of ethylene/vinyl alcohol-copolymer (EVOH) there are provided additives for improving mechanical properties like impact strength, stress crack resistance, elongation at break.

11. Thermoplastic multilayer composite (4) according to any of the preceding claims, **characterized in that** the weight ratio of the first component of the outer layer (3) to the second component of the outer layer (3) is in the range between 2: 3 to 3: 2 , preferably in the range between 2: 3 to 1: 1.

12. Thermoplastic multilayer composite (4) according to one of the claims 17-19 , **characterized in that** the outer layer (3) comprises a compatibilizer, in a proportion in the range between 5-15 parts in weight with reference to the total of the parts in weight of polyamides and compatibilizer.

13. Thermoplastic multilayer composite (4) according to one of the claims 1- 11 , **characterized in that** the outer layer (3) comprises a compatibilizer in a proportion in the range of 5-35 parts in weight, preferably in a proportion of 8-30 parts in weight, in particular preferably in a proportion of 12-25 parts in weight, with reference to the total of the part in weight of polyamides and compatibilizer.

14. Thermoplastic multilayer composite (4) according to claim 12 or 13, **characterized in that** the compatibilizer of the outer layer (3) is an impact strength modifier, an elastomer or a rubber, preferably an acid-modified ethylene/α-olefin copolymer.

15. Method for producing a hollow body of a thermoplastic multilayer composite according to one of the claims 1- 14, **characterized in that** the inner layer (1), the intermediate layer (2) as well as the outer layer (3) are joined in a coextrusion process, preferably to form a hose, a pipe or a container, respectively.

16. Use of a thermoplastic multilayer composite (4) according to one of the claims 1- 14 as a hose line for liquid fuel like petrol or diesel as for example for combustion engines.

17. Use of a thermoplastic multilayer composite (4) according to one of the claims 1-14 as a tank opening, a fuel system vent pipe, or a crankcase vent pipe.

## Revendications

1. Composite multicouche thermoplastique (4) à trois couches seulement en forme d'un corps creux constitué d'une couche interne (1) à base de polyamides, d'une couche intermédiaire (2) ainsi que d'une couche externe (3) thermoplastique, la couche intermédiaire (2) étant à base de copolymères éthylène/alcool vinylique (EVOH), et la couche interne (1) étant directement adjacente à la couche intermédiaire (2),
**caractérisé en ce que** la couche interne (1) est formée à partir d'un mélange des deux homopolymères polyamide polyamide 6 et polyamide 12, et contient un promoteur de compatibilité,
la couche intermédiaire (2) étant directement adjacente à la couche externe (3),
la couche externe (3) étant formée à partir d'un mélange des deux homopolymères polyamide polyamide 6 et polyamide 12, et contenant un promoteur de compatibilité.

2. Composite multicouche thermoplastique (4) selon la revendication 1, **caractérisé en ce que** la couche interne (1) ou le matériau pour la couche interne (1) a été produit(e) à une température de préparation-mélange de 280 °C au maximum et à une température d'extrusion de 280 °C au maximum.

3. Composite multicouche thermoplastique (4) selon la revendication 2, **caractérisé en ce que** la température de préparation-mélange ou, respectivement, la température d'extrusion est au maximum de 250 °C, de préférence dans la plage de 230 °C à 240 °C.

4. Composite multicouche thermoplastique (4) selon l'une quelconque des revendications 1 à 3, **caractérisé en ce que** le rapport pondéral du premier composant au deuxième composant se situe dans la plage allant de 2:3 à 3:2, de préférence dans une plage de 2:3 à 1:1.

5. Composite multicouche thermoplastique (4) selon l'une quelconque des revendications précédentes, **caractérisé en ce que** la couche interne (1) contient un promoteur de compatibilité en une proportion dans la plage de 5-15 parties en poids, par rapport à la somme des parties en poids de polyamides et promoteur de compatibilité.

6. Composite multicouche thermoplastique (4) selon l'une quelconque des revendications 1 à 4, **caractérisé en ce que** la couche interne (1) contient un promoteur de compatibilité en une proportion dans la plage de 5-35 parties en poids, de préférence en une proportion de 8-30 parties en poids, de façon particulièrement préférée en une proportion de 12-25 parties en poids, par rapport à la somme des parties en poids de polyamides et promoteur de compatibilité.

7. Composite multicouche thermoplastique (4) selon la revendication 5 ou 6, **caractérisé en ce que** le promoteur de compatibilité consiste en un modificateur antichoc, un élastomère ou un caoutchouc, de façon particulièrement préférée en un copolymère éthylène/a-oléfine modifié par un acide.

8. Composite multicouche thermoplastique (4) selon l'une quelconque des revendications précédentes, **caractérisé en ce que** le mélange de la couche interne (1) contient des additifs antistatiques, des plastifiants, des pigments, des stabilisants, des additifs ignifuges ou des agents de renforcement.

9. Composite multicouche thermoplastique (4) selon l'une quelconque des revendications précédentes, **caractérisé en ce que** le composite multicouche est en forme de tube et la couche interne ou une couche interne supplémentaire à base de l'alliage de polyamides contient des additifs conducteurs de l'électricité.

10. Composite multicouche thermoplastique (4) selon l'une quelconque des revendications précédentes, **caractérisé en ce que** les additifs supplémentaires dans ladite une couche intermédiaire (2) à base de copolymères éthylène/alcool vinylique (EVOH) sont prévus pour améliorer les caractéristiques mécaniques telles que résistance au choc, résistance à la fissuration sous contrainte, allongement à la rupture.

11. Composite multicouche thermoplastique (4) selon l'une quelconque des revendications précédentes, **caractérisé en ce que** le rapport pondéral du premier composant de la couche externe (3) au deuxième composant de la couche externe (3) va de 2:3 à 3:2, de préférence se situe dans une plage de 2:3 à 1:1.

12. Composite multicouche thermoplastique (4) selon l'une quelconque des revendications 1 à 11, **caractérisé en ce que** la couche externe (3) contient un promoteur de compatibilité en une proportion de 5-15 parties en poids, par rapport à la somme des parties en poids de polyamides et promoteur de compatibilité.

13. Composite multicouche thermoplastique (4) selon l'une quelconque des revendications 1 à 11, **caractérisé en ce que** la couche externe (3) contient un promoteur de compatibilité en une proportion dans la plage de 5-35 parties en poids, de préférence en une proportion de 8-30 parties en poids, de façon particulièrement préférée en une proportion de 12-25 parties en poids, par rapport à la somme des parties en poids de polyamides et promoteur de compatibilité.

14. Composite multicouche thermoplastique (4) selon la revendication 12 ou 13, **caractérisé en ce que** le promoteur de compatibilité de la couche externe (3) consiste en un modificateur antichoc, un élastomère ou un caoutchouc, de façon particulièrement préférée en un copolymère éthylène/a-oléfine modifié par un acide.

15. Procédé pour la production d'un corps creux à base d'un composite multicouche thermoplastique selon l'une quelconque des revendications 1 à 14, **caractérisé en ce que** la couche interne (1), la couche intermédiaire (2) ainsi que la couche externe (3) sont assemblées dans un processus de coextrusion, en particulier de préférence en un tube ou en un conduit ou en un récipient.

16. Utilisation d'un composite multicouche thermoplastique (4) selon l'une quelconque des revendications 1 à 14, en tant que conduit de carburant en particulier pour carburants liquides tels que l'essence ou le gazole, par exemple dans des moteurs à combustion.

17. Utilisation d'un composite multicouche thermoplastique (4) selon l'une quelconque des revendications 1 à 14, en tant que conduit de remplissage de réservoir, reniflard de circuit d'alimentation en carburant ou reniflard de carter moteur.
